# FASCICULE DE BREVET EUROPEEN

(11) **EP 0 862 801 B1**
(45) Date de publication et mention de la délivrance du brevet: **26.01.2000**
(21) Numéro de dépôt: 96939146.5
(22) Date de dépôt: 19.11.1996
(51) Int. Cl.: H01R 13/53, H02G 15/184

(54) **PIECE DE RACCORDEMENT ELECTRIQUE**
ELEKTRISCHES KUPPLUNGSTEIL
ELECTRICAL COUPLING PART

(30) Priorité: 21.11.1995 FR 9513778
(43) Date de publication de la demande: 09.09.1998
(73) Titulaire: SAGEM SA, 75116 Paris (FR)
(72) Inventeur: GREGORIS, Jean-Luc, F-77130 Montereau (FR); ZEN, Lino, F-77130 Cannes-Ecluse (FR)
(74) Mandataire: Fruchard, Guy
(86) Numéro de dépôt international: FR9601826
(87) Numéro de publication internationale: WO9719495

(56) Documents cités:
- EP-A- 0 504 035
- EP-A- 0 683 556
- DE-A- 3 508 329
- DE-U- 9 103 144

## Description

La présente invention concerne une pièce de raccordement électrique comportant un organe de raccordement conducteur, une couche interne conductrice entourant l'organe de raccordement, une couche isolante entourant la couche conductrice, et un manchon protecteur élastique.

On sait que les câbles électriques moyenne ou haute tension comportent généralement une âme conductrice recouverte d'une couche isolante elle-même recouverte d'un écran semi-conducteur en contact avec un blindage métallique relié à la terre et recouvert d'une gaine externe.

On sait également que lors du raccordement d'un câble électrique à un autre câble électrique ou à un équipement, ou lors de la mise en attente d'une extrémité d'un câble électrique, il est nécessaire de dénuder l'âme conductrice du câble et, généralement, de sectionner l'écran semi-conducteur en retrait de l'extrémité de la couche isolante afin d'éviter la formation d'un arc électrique entre l'âme conductrice qui est portée à un potentiel élevé et l'écran semi-conducteur qui est au potentiel de la terre.

Afin d'éviter l'apparition de contraintes électriques à l'extrémité de l'écran semi-conducteur, il est ensuite nécessaire de disposer sur la jonction ou sur l'extrémité de câble un manchon protecteur comportant une couche conductrice, semi-conductrice ou en matériau réducteur de contraintes destinée à venir en contact avec l'extrémité de l'écran semi-conducteur.

L'extrémité de l'écran semi-conducteur réalise une marche par rapport à la couche isolante du câble et la solution la plus simple pour mettre la couche conductrice ou semi-conductrice du manchon protecteur en liaison avec l'extrémité de l'écran semi-conducteur consisterait à mettre l'extrémité du manchon en appui sur l'extrémité de l'écran semi-conducteur en utilisant un manchon protecteur comme décrit dans le document DE-A-35 08 329. Toutefois, qu'il s'agisse d'une jonction de câble ou d'une extrémité de câble, le manchon protecteur est généralement associé à d'autres éléments qui sont positionnés par rapport à l'extrémité de l'âme conductrice ou l'extrémité de la couche isolante du câble de sorte que la mise en bout du manchon protecteur par rapport à l'écran semi-conducteur ne pourrait être obtenue qu'à condition de découper l'écran semi-conducteur à une distance très précise par rapport à l'extrémité de l'âme conductrice ou de la couche isolante, ce qui est difficilement réalisable sur un chantier. E n outre, la mise en appui de l'extrémité du manchon protecteur sur l'extrémité de l'écran semi-conducteur du câble ne permettrait pas d'assurer une bonne étanchéité entre la pièce de raccordement et le câble.

On connaît également du document EP-A-504 035 une pièce de raccordement comprenant un manchon protecteur qui est soit en matière thermorétractable soit en matière élastique supportée mécaniquement dans un état expansé, ce qui implique dans un cas comme dans l'autre une opération d'expansion en atelier qui risque de provoquer une déformation permanente du manchon protecteur.

Afin d'assurer une liaison entre le manchon protecteur et l'extrémité de l'écran semi-conducteur, on prévoit donc généralement un recouvrement de l'extrémité de l'écran semi-conducteur par le manchon protecteur sur une distance qui est plusieurs fois l'épaisseur de l'écran semi-conducteur. Pour assurer un bon contact entre le manchon protecteur et l'écran semi-conducteur du câble, il est souhaitable que le manchon protecteur soit réalisé dans une matière élastique ayant au repos un diamètre légèrement inférieur au diamètre externe de l'écran semi-conducteur du câble.

Cependant, ainsi qu'il a été rappelé ci-dessus, l'extrémité de l'écran semi-conducteur forme une marche par rapport à la couche isolante de sorte que l'extrémité du manchon protecteur tend à venir en butée sur cette marche lors de sa mise en place. Pour franchir cette marche, on prévoit selon le document EP-A-683 556 de disposer sur le câble une pièce conique préalablement à la mise en place de la pièce de raccordement.

Toutefois, cette manipulation supplémentaire est une source de difficultés sur un chantier.

Selon l'invention, on prévoit une pièce de raccordement électrique comportant un organe de raccordement conducteur, une couche interne conductrice entourant l'organe de raccordement, une couche isolante entourant la gaine conductrice, et un manchon protecteur élastique qui, au repos avant sa mise en place sur un câble électrique, comporte au moins une partie cylindrique adjacente à une extrémité de la couche isolante et une partie conique qui est adjacente à la partie cylindrique et va en s'évasant à partir de la partie cylindrique, le manchon protecteur comportant en outre à une extrémité opposée à la partie cylindrique un orifice ayant un diamètre supérieur à la partie cylindrique.

Ainsi, lors de la mise en place de la pièce de raccordement sur un câble électrique dont la gaine semi-conductrice a un diamètre légèrement supérieur au diamètre de la partie cylindrique du manchon protecteur le diamètre plus élevé de l'orifice du manchon protecteur permet d'engager celui-ci sur le câble et la partie conique du manchon protecteur sert de rampe pour permettre un emmanchement élastique de la partie cylindrique du manchon protecteur sur l'écran semi-conducteur du câble lorsque la pièce de raccordement est poussée axialement pour s'engager sur l'extrémité du câble.

Selon une version avantageuse de l'invention, le manchon comporte une partie conique qui est adjacente à l'orifice et a un diamètre allant en se réduisant vers celui-ci. Ainsi, lorsque la pièce de raccordement a été mise en place, l'élasticité de la partie conique adjacente à l'orifice du manchon protecteur assure un serrage de l'extrémité du manchon protecteur sur le câble et donc une bonne étanchéité du montage de la pièce de raccordement.

D'autres caractéristiques et avantages de l'invention apparaîtront à la lecture de la description qui suit d'un mode de réalisation particulier non limitatif de l'invention en relation avec les figures ci-jointes parmi lesquelles :
- la figure 1 est une vue en coupe axiale d'une pièce de raccordement comportant un manchon selon l'invention avant sa mise en place ; et,
- la figure 2 est une vue en coupe axiale d'une pièce de raccordement de la figure 1 mise en place sur un câble.

En référence aux figures, la pièce de raccordement selon l'invention est destinée à être mise en place sur un câble électrique qui comporte de façon connue en soi une âme conductrice 1 recouverte d'une couche isolante 2 qui est sectionnée lors de la préparation du câble en retrait de l'extrémité de l'âme conductrice 1 pour dégager cette extrémité, un écran semi-conducteur 3 qui recouvre la couche isolante 2 et est sectionnée en retrait de l'extrémité de la couche isolante 2, un blindage métallique 4 et une gaine externe 5 qui sont sectionnés en retrait de l'extrémité de l'écran semi-conducteur 3. La mise à la terre de l'écran semi-conducteur 3 et du blindage métallique 4 est assurée par une bague métallique 6 qui est glissée sous l'extrémité du blindage métallique 4 et est reliée à une tresse métallique 7 convenablement reliée au potentiel de la terre de façon non représentée.

De son côté, la pièce de raccordement électrique illustrée est une prise embrochable qui est réalisée de façon préfabriquée moulée monobloc et comporte un organe de raccordement conducteur 8 destiné à être serti sur l'extrémité de l'âme conductrice du câble, une couche interne conductrice 9 qui entoure l'organe de raccordement et est destinée à recouvrir l'extrémité de la gaine isolante 2 du câble en étant en contact avec celle-ci, une couche isolante 10 qui recouvre la gaine interne conductrice 9, et un manchon protecteur élastique généralement désigné en 11 qui est formé d'une seule couche en caoutchouc conducteur ou semi-conducteur. Le manchon protecteur 11 recouvre la couche isolante 10 et s'étend au-delà de celle-ci.

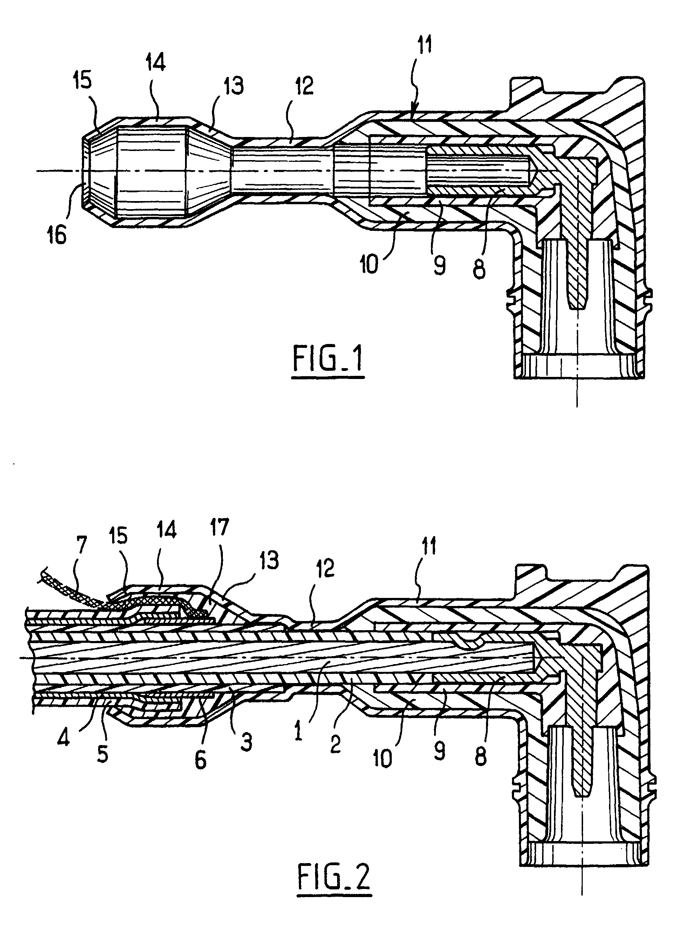

Selon l'invention, la portion de manchon protecteur 11 qui s'étend au-delà de la couche isolante 10 comporte au repos une partie cylindrique 12 adjacente à l'extrémité de la couche isolante 10, une partie conique 13 qui est adjacente à la partie cylindrique 12 et va en s'évasant depuis la partie cylindrique 12 vers l'extrémité libre du manchon protecteur 11, une partie cylindrique 14 reliée à la partie de plus grand diamètre de la partie conique 13, et une partie conique 15 allant en se réduisant vers un orifice 16 à une extrémité opposée à la partie cylindrique 12. Dans la position de repos qui est illustrée sur la figure 1, la partie cylindrique 12 a un diamètre légèrement inférieur au diamètre de l'écran semi-conducteur 3 du câble sur lequel la pièce de raccordement doit être montée, et de préférence un diamètre très légèrement inférieur à la couche isolante 2 du câble. Par ailleurs, l'orifice 16 a un diamètre supérieur à celui de la partie cylindrique 12 et de préférence légèrement supérieur au diamètre de l'écran semi-conducteur 3 du câble sur lequel la pièce de raccordement doit être montée.

Avant la mise en place de la pièce de raccordement selon l'invention, l'extrémité du blindage métallique 4 et de la gaine externe 5 ainsi que l'extrémité apparente de la bague métallique 6 et la portion d'écran semi-conducteur 3 immédiatement adjacente sont recouvertes d'un mastic d'étanchéité 17 lui-même recouvert d'un ruban enroulé autour du mastic d'étanchéité 17 pour maintenir celui-ci pendant la mise en place de la pièce de raccordement. Ce ruban n'a pas été représenté sur la figure.

En outre de la graisse est de préférence disposée à l'intérieur du manchon protecteur 11 et sur la surface externe de la couche isolante 2 du câble.

Lors de l'introduction de la pièce de raccordement sur le câble, l'ouverture 16 du manchon protecteur est aisément engagée sur l'extrémité du câble et la graisse facilite l'introduction du manchon sur la couche isolante 2 jusqu'au moment où la partie conique 13 vient en appui sur l'extrémité de l'écran semi-conducteur 3. La partie conique 13 sert alors de rampe prenant appui sur l'extrémité de l'écran semi-conducteur 3 pour provoquer un évasement de la partie cylindrique 12 qui vient ainsi en contact étroit avec l'extrémité de l'écran semi conducteur 3 tandis que la partie conique 13 vient en appui sur le ruban entourant le mastic d'étanchéité 17 et la graisse comble l'espace entre l'extrémité de l'écran semi-conducteur et la face interne de la partie cylindrique 12 du manchon protecteur. La partie cylindrique 14 et la partie conique 15 prennent également appui sur le mastic 17. On remarquera sur la figure 2 que la partie conique 15 allant en se rétrécisant vers l'orifice d'extrémité 16 assure un maintien en place du manchon protecteur à l'aplomb du mastic d'étanchéité 17 de sorte que celui-ci est fermement maintenu appliqué contre les éléments dont il est destiné à assurer l'étanchéité.

Bien entendu, l'invention n'est pas limitée au mode de réalisation décrit et on peut y apporter des variantes de réalisation sans sortir du cadre de l'invention tel que défini par les revendications.

En particulier, bien que la pièce de raccordement selon l'invention ait été décrite avec un manchon protecteur comportant une partie cylindrique 14 s'étendant entre la partie conique 13 et la partie conique 15 pour assurer un recouvrement du mastic 17 sur une longueur relativement grande, on peut prévoir un manchon protecteur comportant une partie conique 15 directement raccordée à la partie conique 13 ou ayant une section en arc de cercle entre la partie cylindrique 12 et l'orifice d'extrémité 16.

Par ailleurs, bien que l'invention ait été décrite en relation avec une pièce de raccordement se présentant sous forme d'un prise embrochable, l'invention s'applique également à une jonction de deux câbles, le manchon protecteur 11 étant alors réalisé de façon symétrique par rapport à un organe conducteur tubulaire débouchant vers les deux extrémités du manchon protecteur 11, chaque extrémité du manchon protecteur 11 comportant une partie en porte-à-faux ayant les caractéristiques énoncées ci-dessus.

## Revendications

1. Pièce de raccordement électrique comportant un organe de raccordement conducteur (8), une couche interne conductrice (9) entourant l'organe de raccordement, une couche isolante (10) entourant la couche conductrice, et un manchon protecteur (11) élastique, caractérisée en ce que, au repos avant sa mise en place sur un câble électrique, le manchon protecteur (11) comporte au moins une partie cylindrique (12) adjacente à une extrémité de la couche isolante et une partie conique (13) qui est adjacente à la partie cylindrique (12) et va en s'évasant à partir de la partie cylindrique (12), le manchon protecteur comportant en outre à une extrémité opposée à la partie cylindrique (12) un orifice (16) ayant un diamètre supérieur à la partie cylindrique (12).

2. Pièce de raccordement selon la revendication 1, caractérisée en ce que le manchon comporte une partie conique (15) qui est adjacente à l'orifice (16) et a un diamètre allant en se réduisant vers celui-ci.

3. Pièce de raccordement selon la revendication 2, caractérisée en ce que le manchon protecteur (11) comporte une partie cylindrique (14) entre les parties coniques (13,15).

## Patentansprüche

1. Elektrisches Anschlußteil mit einem leitenden Verbindungselement (8), einer leitenden Innenschicht (9), die das Verbindungselement umgibt, einer Isolierschicht (10), welche die leitende Schicht umgibt, und einer elastischen Schutzhülle (11), dadurch **gekennzeichnet**, daß die Schutzhülle (11) im unbenutzten Zustand vor ihrem Anbringen auf einem elektrischen Kabel mindestens einen an ein Ende der Isolierschicht angrenzenden zylindrischen Abschnitt (12) und einen kegelförmigen Abschnitt (13) hat, der an den zylindrischen Abschnitt (12) angrenzt und ab dem zylindrischen Abschnitt (12) breiter wird, wobei die Schutzhülle ferner an einem dem zylindrischen Abschnitt (12) entgegengesetzten Ende eine Öffnung (16) mit einem Durchmesser hat, der größer als der des zylindrischen Abschnittes (12) ist.

2. Anschlußteil nach Anspruch 1, dadurch **gekennzeichnet**, daß die Hülle einen konischen Abschnitt (15) hat, der an die Öffnung (16) angrenzt und einen Durchmesser hat, der sich zu dieser hin verringert.

3. Anschlußteil nach Anspruch 2, dadurch **gekennzeichnet**, daß die Schutzhülle (11) zwischen den kegelförmigen Abschnitten (13, 15) einen zylindrischen Abschnitt (14) hat.

## Claims

1. An electrical coupling part comprising a conductive coupling member (8), an inner conductive layer (9) surrounding the coupling member, an insulating layer (10) surrounding the conductive layer, and an elastic protective sleeve (11), the coupling piece being characterized in that, at rest before being put into place on an electric cable, the protective sleeve (11) comprises at least one cylindrical portion (12) adjacent to an end of the insulating layer and a conical portion (13) adjacent to the cylindrical portion (12) and flaring away from the cylindrical portion (12), the protective sleeve further comprising, at an end remote from the cylindrical portion (12), an orifice (16) of greater diameter than the cylindrical portion (12).

2. A coupling part according to claim 1, characterized in that the sleeve includes a conical portion (15) adjacent to the orifice (16) and of a diameter that tapers towards the orifice.

3. A coupling part according to claim 2, characterized in that the protective sleeve (11) includes a cylindrical portion (14) between the conical portions (13, 15).
